Europäisches Patentamt

European Patent Office

Office européen des brevets

(19)

(11) Veröffentlichungsnummer : **0 058 220**
**B1**

## (12) EUROPÄISCHE PATENTSCHRIFT

(45) Veröffentlichungstag der Patentschrift :
28.08.85

(21) Anmeldenummer : 81103813.2

(22) Anmeldetag : 18.05.81

(51) Int. Cl.⁴ : **F 16 B 12/12**

(54) **Verbindungsbeschlag.**

(30) Priorität : 17.12.80 DE 3047642

(43) Veröffentlichungstag der Anmeldung :
25.08.82 Patentblatt 82/34

(45) Bekanntmachung des Hinweises auf die Patenterteilung : 28.08.85 Patentblatt 85/35

(84) Benannte Vertragsstaaten :
AT DE FR GB IT

(56) Entgegenhaltungen :
BE-A-  417 204
DE-A- 1 966 735
DE-A- 2 206 684
DE-C-  231 111
DE-U- 7 047 932
US-A- 4 186 976

(73) Patentinhaber : **Arturo Salice S.p.A.**
**Via Provinciale Novedratese 10**
**I-22060 Novedrate (Como) (IT)**

(72) Erfinder : **Der Erfinder hat auf seine Nennung**
**verzichtet**

(74) Vertreter : **Lorenz, Eduard et al**
**Rechtsanwälte Eduard Lorenz - Bernhard Seidler**
**Margrit Seidler - Dipl.-Ing. Hans-K. Gossel Dr. Ina**
**Philipps - Dipl.-Chem. Rainer Wulf Widenmayer-**
**strasse 23**
**D-8000 München 22 (DE)**

EP 0 058 220 B1

**Beschreibung**

Die Erfindung betrifft einen Verbindungsbeschlag zum lösbaren Verbinden zweier, vorzugsweise rechtwinkelig aufeinanderstoßender, plattenförmiger Möbelteile nach dem Oberbegriff des Patentanspruchs 1.

Bei einem aus DE-U-70 47 932 bekannten Verbindungsbeschlag dieser Art greift der hakenförmige Vorsprung mit Spiel eine Ausnehmung des anderen Beschlagteils, was sich in einem lästigen Wackeln der miteinander ver-bundenen Möbelteile relativ zueinander bemerk-bar macht. Weiterhin läßt sich dieser bekannte Verbindungsbeschlag nur durch Niederdrücken einer Drucktaste lösen, so daß sich bei einer Demontage Schwierigkeiten ergeben können, wenn gleichzeitig mehrere Verbindungsbeschläge gelöst werden müssen.

Aufgabe der Erfindung ist es daher, einen einfach zu handhabenden Verbindungsbeschlag nach dem Oberbegriff des Patentanspruchs 1 zu schaffen, der eine spielfreie Verbindung der Möbelteile ermöglicht.

Erfindungsgemäß wird diese Aufgabe durch die kennzeichnenden Merkmale des Patentanspruchs 1 gelöst.

Aufgrund der selbstspannenden Keilwirkung wird bei dem erfindungsgemäßen Verbindungsbeschlag auf den Rasthebel ein beträchtlicher Zug ausgeübt, der zu einem Verspannen der Beschlagteile führt.

Die Zuordnung der Flanke des Rastvorsprungs zu der Abstützkante ist selbst verständlich so zu wählen, daß diese nicht zur Auflage auf dem Rasthebel kommt, weil sonst die selbstspannende Keilwirkung aufgehoben würde.

Die Handhabung des erfindungsgemäßen Verbindungsbeschlags ist einfach und bequem. Zum Herstellen der Verbindungen brauchen die Beschlagteile nur zusammengeschoben zu werden, bis der Rastvorsprung hinter die entsprechende Abstützkante des anderen Beschlagteils einrastet. Beim Lösen der Verbindungsbeschläge werden die Rasthebel durch diese entriegelnde Einrichtungen in ihrer entriegelten Stellung gehalten, so daß sich vor dem Auseinandernehmen der Möbelteile die Verbindungsbeschläge lösen lassen, ohne daß umständliche Manipulationen erforderlich wären, um diese in ihrer gelösten Stellung zu halten.

Ein aus US-A-41 86 976 bekannter Verbindungsbeschlag weist ebenfalls zwei an den zu verbindenden Möbelteilen befestigbare Beschlagteile auf, von denen einer mit einem gegen die Kraft einer Feder schwenkbar gelagerten Rasthebel mit vorderem hakenförmigen Rastvorsprung versehen ist, der durch Einschnappen der rückwärtigen Flanke des Rastvorsprungs hinter eine Abstützkante des anderen Beschlagteils mit diesem verbindbar ist. Die rückwärtige Flanke des Rastvorsprungs ist bei diesem Verbindungsbeschlag jedoch mit Nuten oder Riefen versehen, so daß eine selbstspannende Wirkung der Beschlagteile nicht erreichbar ist, weil die rückwärtige Flanke nicht auf der Abstützkante des anderen Beschlagteils gleiten kann, sondern auf dieser ähnlich wie eine Ratsche nur Zahn um Zahn fortgeschaltet wird.

Vorteilhafte Ausgestaltungen der Erfindung sind Gegenstand der Unteransprüche.

Ausführungsbeispiele der Erfindung werden nachstehend anhand der Zeichnung näher erläutert. In dieser zeigt

Figur 1 einen Schnitt durch eine erste Aus-führungsform eines zwei winkelig aufeinander-stoßende plattenförmige Möbelteile ver-bindenden Verbindungsbeschlages,

Figur 2 eine perspektivische Ansicht des Rasthebels des einen Beschlagteils und des eine Gegenrast bildenden Bolzens des anderen Beschlagteils des Verbindungsbeschlages nach Fig. 1,

Figur 3 den Verbindungsbeschlag nach Fig. 1 im zusammengefügten Zustand,

Figur 4 eine Seitenansicht einer Gehäusehälfte des mit dem Rasthebel versehenen Beschlagteils mit Öffnungshebel,

Figur 5 eine perspektivische Ansicht des Öffnungshebels nach Fig. 4,

Figur 6 eine Draufsicht auf das geteilte Gehäuse des mit dem Rasthebel versehenen Beschlagteils nach Fig. 1,

Figur 7 eine Draufsicht auf das Gehäuse im geschlossenen Zustand nach Fig. 4,

Figur 8 einen Schnitt durch eine andere Aus-führungsform eines zwei stumpf aufeinander-stoßende plattenförmige Möbelteile ver-bindenden Verbindungsbeschlages,

Figur 9 eine Vorderansicht des mit der Gegenrast versehenen Beschlagteils,

Figur 10 einen Schnitt durch zwei zwei plattenförmige Möbelteile in derselben Ebene beidseits an eine Zwischenwand anschließende Verbindungsbeschläge und

Figur 11 einen Schnitt durch die Verbindungsbeschläge nach Fig. 10 Längs der Linie XI-XI.

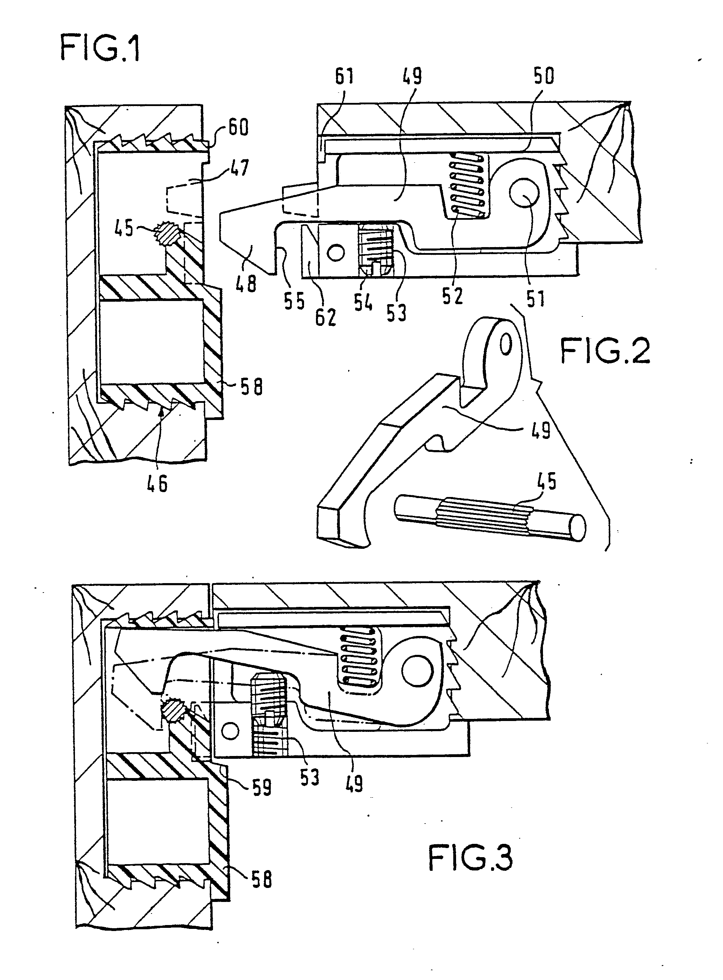

Bei der Ausführungsform eines Verbindungsbeschlages nach Fig. 1 ist das in ein eingefrästes Sackloch der vertikalen Möbelwand eingesetzte topfförmige Beschlagteil 46 mit einer schlitzförmigen Einschuböffnung 47 für den einen Haken oder Rastvorsprung 48 tragenden Verrastungshebel 49 versehen. Die Unterseite der Einschuböffnung 47 steigt keilförmig bis zu dem eine Rastkante bildenden Bolzen 45, der in den Seitenwandungen des topfförmigen Gehäuseteils 46 befestigt ist, an. Hinter dem Bolzen 45 fällt die Unterseite der Einschuböffnung 47 unter Bildung einer Stufe steil ab. Der Bolzen 45 ist in der hinteren Kante der Stufe angeordnet und bildet dadurch eine Rastkante. Die Unterseite der Einschuböffnung 47 schließt etwa tangential an den Mantel des Bolzens 45 an, während dieser die abfallende Seite der Stufe überragt.

Der Rasthebel 49 ist in dem topfförmigen Gehäuseteil 50 um den Gelenkbolzen 51 schwenkbar gelagert und wird von der Schraubendruckfeder 52 in Richtung auf seine Verrastungsstellung beaufschlagt. In die obere Wandung des Gehäuseteils 50 ist in eine Gewindebohrung 53 die stiftförmige Schraube 54 eingeschraubt, die durch tieferes Einschrauben den Verrastungshebel 49 aus seiner verrasteten Stellung drückt und in dieser fixiert. Diese Stellung des Rasthebels 49 ist in Fig. 3 in stark ausgezogenen Linien dargestellt. In der verrasteten Stellung stützt sich die hintere Flanke 55 des Hakens 48 des Rasthebels 49 in der aus Fig. 3 in schwach ausgezogenen Linien ersichtlichen Weise auf dem Bolzen 45 ab. Die Flanke 55 greift mit flachem Keilwinkel an dem Bolzen 45 an, so daß die in Fig. 3 in ihrer verrasteten Stellung dargestellten Beschlagteile miteinander verspannt werden.

Der Bolzen 45 ist in der aus Fig. 2 ersichtlichen Weise mit in axialer Richtung verlaufenden Riefen versehen.

Das Gehäuseteil 50 ist beidseits des Rasthebels 49 mit konusförmigen Zapfen 56, 57 versehen, die in entsprechende Ausnehmungen des Gehäuseteils 46 greifen.

Der Flansch 58 des Gehäuseteils 46 bildet in seinem mittleren Bereich eine waagerechte Stufe 59, auf die sich das mit dem Rasthebel 49 versehene Gehäuseteil 50 mit seiner Vorderkante im verrasteten Zustand abstützt.

Das Gehäuseteil 46 ist an seiner dem Flansch 58 gegenüberliegenden Seite mit kurzen flanschartigen Fortsätzen 60 versehen, die sich auf dem Rand des Sacklochs abstützen. Zur Aufnahme dieser Fortsätze 60 ist das Gehäuseteil 50 mit einer entsprechenden stufenförmigen Ausnehmung 61 versehen.

Auch das Gehäuseteil 50 ist an seiner Vorderseite mit seitlichen hakenartigen Vorsprüngen 62, 63 versehen, die der besseren Verankerung an dem Möbelteil dienen. Das Gehäuseteil 46 ist zur Aufnahme der Vorsprünge 62, 63 mit entsprechenden Ausnehmungen versehen.

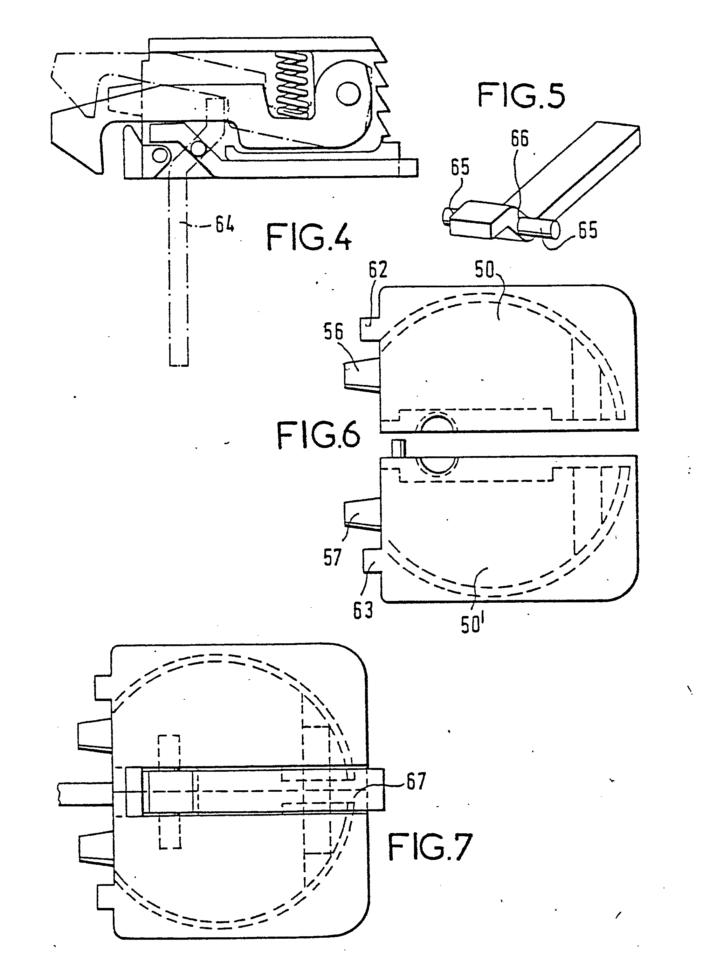

Um die Verrastung der Beschlagteile wieder lösen zu können, ist das mit dem Verrastungshebel versehene Beschlagteil bei der in Fig. 4 dargestellten Ausführungsform mit einem zweiarmigen Hebel 64 versehen. Zur Lagerung des Hebels 64 ist dieser in der aus Fig. 5 ersichtlichen Weise mit Achsstummeln 65 versehen. Der Hebel 64 ist mit einer Kröpfung 66 versehen, so daß er in seiner in Fig. 4 in schwachen Linien dargestellten, die Verrastung lösenden Stellung fixiert ist. Der längere Arm 67 des Hebels 65 liegt in der verrasteten Stellung in einer nutförmigen Vertiefung der Oberseite des Gehäuseteils 50. Um die Montage zu erleichtern, besteht das mit dem Rasthebel 49 versehene Beschlagteil in der aus den Fig. 6 und 7 ersichtlichen Weise aus zwei Teilen 50, 50'.

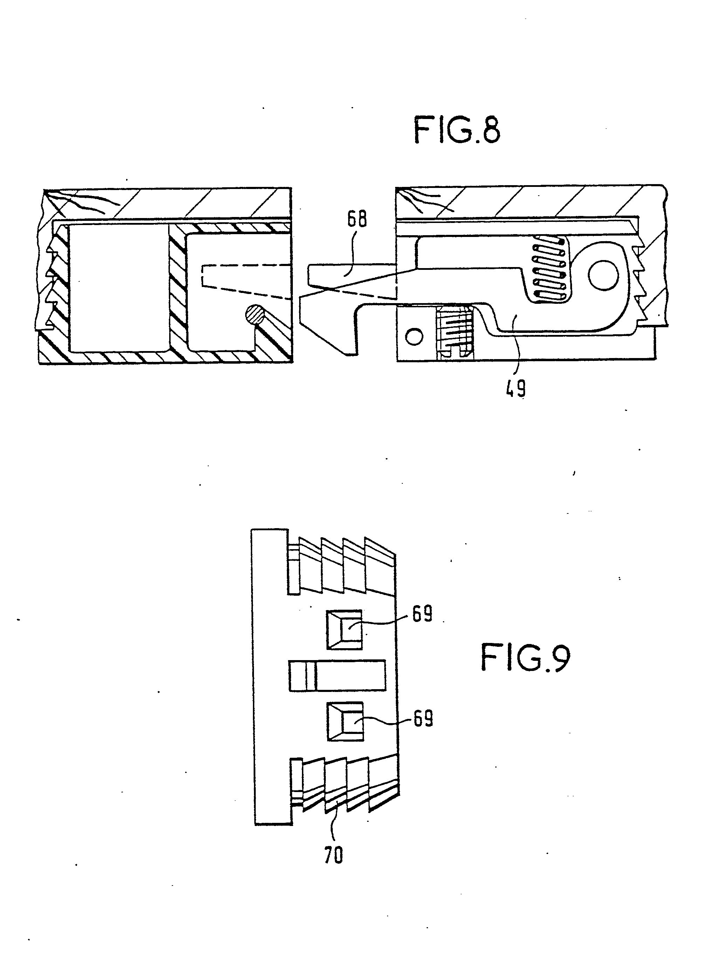

Das in Fig. 8 dargestellte Beschlagteil entspricht in seinem grundsätzlichen Aufbau dem aus Fig. 1 ersichtlichen. Es unterscheidet sich von diesem im wesentlichen nur dadurch, daß die miteinander verrastenden Beschlagteile an den schmalen Stirnseiten von Möbelbrettern befestigt sind und zum Verbinden dieser stumpf aufeinanderstoßenden Bretter dienen. Die seitlich des Verrastungshebels 49 angeordneten Zapfen 68 sind länger ausgeführt und weisen, wie aus den aus Fig. 9 ersichtlichen Aufnahmen 69 des Gehäuseteils 70 folgt, eine pyramidenstumpfförmige Form auf.

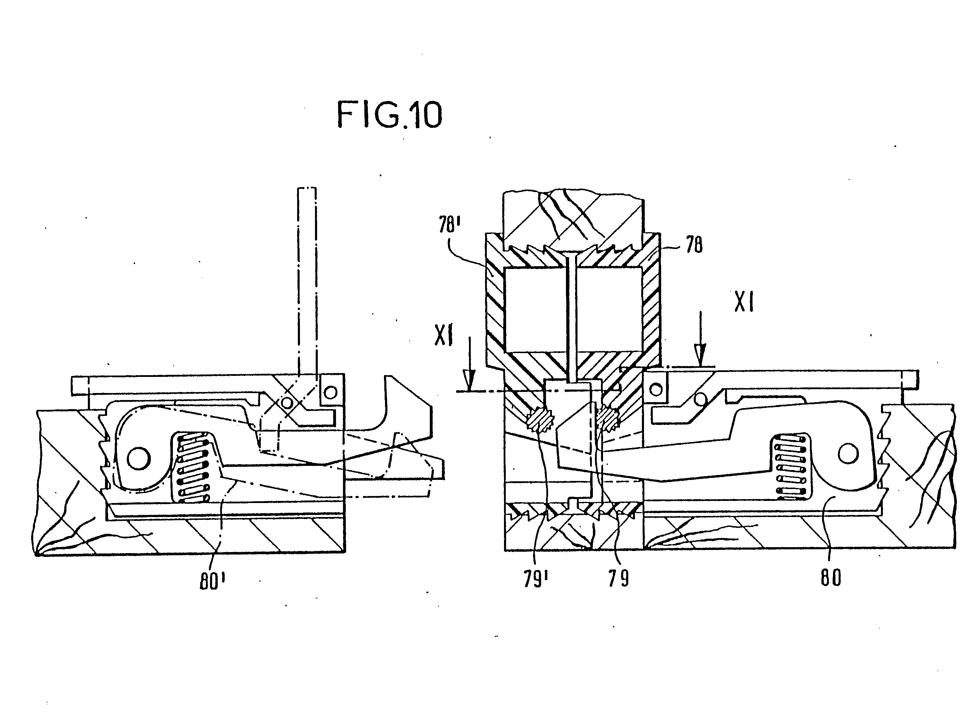

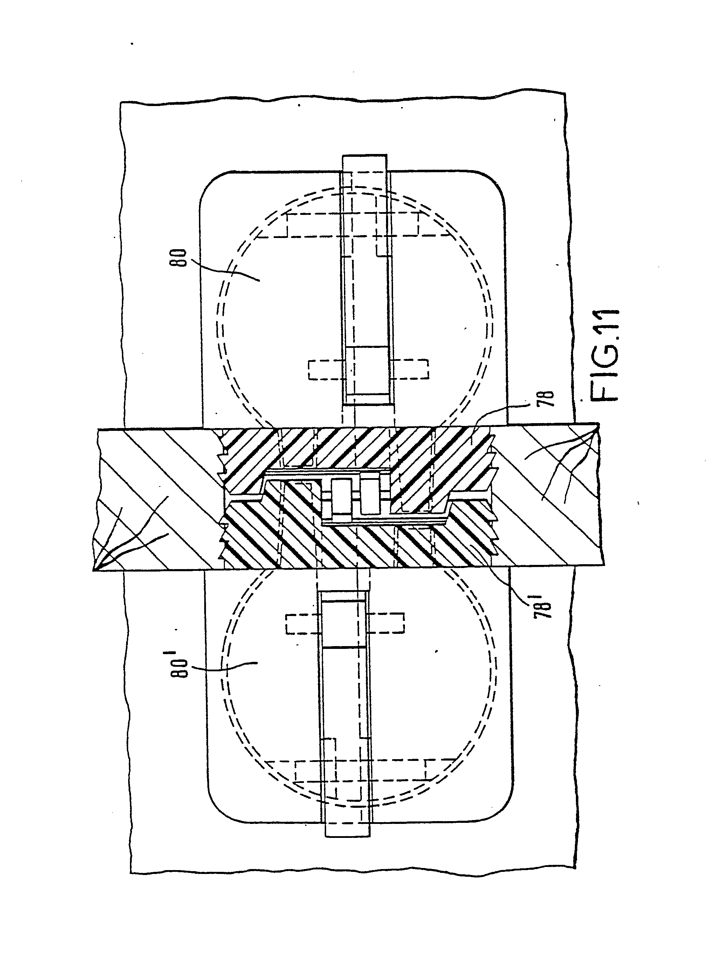

Die in den Fig. 10 und 11 dargestellten Beschlagteile entsprechen den Ausführungsformen nach den Fig. 1 und 4 und sind in der Weise abgewandelt worden, daß sie den beidseitigen Anschluß von Zwischenböden oder dergleichen an eine vertikale Möbelwand gestatten.

Die in eine Durchgangsbohrung der vertikalen Möbelwand eingesetzten Gehäuse 78, 78' der mit dem Rastbolzen 79, 79' versehenen Beschlagteile sind bodenseitig offen, um den behinderungsfreien Durchtritt der Hakenteile der Rasthebel zu ermöglichen.

Die Gehäuse 78, 78' sind identisch ausgeführt und weisen seitlich versetzte abgestufte und Vorsprünge bildende Teile auf, die bei ihrer aus Fig. 11 ersichtlichen spiegelbildlichen Montage ineinander greifen.

Die Verrastungshebel der Beschlagteile 80, 80' sind außermittig angeordnet, so daß sie in der aus Fig. 11 ersichtlichen verrasteten Stellung einander überlappend nebeneinander liegen.

**Patentansprüche**

1. Verbindungsbeschlag zum lösbaren Verbinden zweier, vorzugsweise rechtwinklig aufeinanderstoßender, plattenförmiger Möbelteile, bestehend aus zwei an jedem der zu verbindenden Möbelteile befestigbaren Beschlagteilen (46, 50), von denen einer teilweise in eine Ausnehmung des anderen Möbel- oder Beschlagteils bis zum Anschlag der Beschlagteile (46, 50) und/oder Möbelteile aufeinander einschiebbar und einer mit einem gegen die Kraft einer Feder (52) schwenkbar gelagerten Rasthebel (49) mit vorderem hakenförmigen Rastvorsprung (48) versehen ist, so daß die Beschlagteile im zusammengeschobenen Zustand durch Einschnappen der rückwärtigen Flanke (55) des Rastvorsprungs (48) hinter eine Abstützkante (45) einer Stufe oder Leiste des anderen Beschlagteils (46) verbindbar sind, wobei ein Rand des Möbel- oder Beschlagteils, über den der Rastvorsprung (48) beim Einschieben gleitet, und/oder die vordere Seite des Rastvorsprungs (48) mit einer Abschrägung versehen und eine Einrichtung (54, 64) zum Verschwenken des Rasthebels (49) gegen die Kraft der Feder (52) in seine entriegelte Stellung vorgesehen sind, dadurch gekennzeichnet, daß sich im verbundenen Zustand der Beschlagteile (46, 50) der Rastvorsprung (48) mit seiner rückwärtigen Flanke (55) oberhalb deren Fußpunkt an dem Rasthebel (49) unter Keilwirkung auf der Abstützkante (45) derart abstützt, daß die Feder (52) auf den Rasthebel (49) einen die Beschlagteile (46, 50) ständig verspannenden Zug ausübt, und daß Sperrmittel vorgesehen sind, die den in seine entriegelte Stellung verschwenkten Rasthebel (49) in dieser Stellung halten.

2. Verbindungsbeschlag nach Anspruch 1, dadurch gekennzeichnet, daß die Abstützkante aus einem im Querschnitt runden Bolzen (45, 79, 79') besteht.

3. Verbindungsbeschlag nach Anspruch 1 oder 2, dadurch gekennzeichnet, daß sich der radiale Abstand der rückwärtigen Flanke (55) des hakenförmigen Teils des Rasthebels (49) zu dessen Schwenkachse in Richtung auf den Grund der Flanke (55) hin ständig verringert und daß die Flanke (55) in ihrem verrasteten Zustand etwa in ihrem mittleren Bereich auf der Abstützkante oder dem Bolzen (45) aufliegt.

4. Verbindungsbeschlag nach einem der Ansprüche 1 bis 3, dadurch gekennzeichnet, daß der Bolzen (45, 79, 79') mit einer Rändelung oder axial verlaufenden Riefen versehen ist.

5. Verbindungsbeschlag nach einem der Ansprüche 1 bis 4, dadurch gekennzeichnet, daß die obere Wand des Gehäuses im Bereich des Rasthebels (49) mit einer Gewindebohrung (53) versehen ist, in die eine den Rasthebel (49) gegen die Kraft der Feder (52) herabdrückende stiftförmige Schraube (54) einschraubbar ist.

6. Verbindungsbeschlag nach einem der Ansprüche 1 bis 4, dadurch gekennzeichnet, daß in der oberen Wandung des mit dem Rasthebel versehenen Beschlagteils ein zweiarmiger Hebel (64) schwenkbar gelagert ist, dessen längerer Arm (67) auf der Außenseite der Wandung und dessen kürzerer Arm derart an dem in dem Beschlagteil gelagerten Rasthebel (49) angreift, daß dieser bei zur Wandung etwa parallel liegendem längeren Hebelarm (67) in seine verrastende Stellung zu schwenken vermag und durch Aufstellen des längeren Hebelarms (67) außer Eingriff mit der Abstützkante oder Gegenrast (45) gebracht wird.

7. Verbindungsbeschlag nach Anspruch 6, dadurch gekennzeichnet, daß der zweiarmige Hebel (64) derart abgekröpft ist, daß er von dem ausgeschwenkten Rasthebel (49) in seiner aufgerichteten Stellung gehalten wird.

8. Verbindungsbeschlag nach Anspruch 6 oder 7, dadurch gekennzeichnet, daß die Wandung des Beschlagteils mit einer Aussparung versehen ist, in der der längere Hebelarm (67) in der verrasteten Stellung mit zu der Wandung bündiger Oberfläche liegt.

9. Verbindungsbeschlag nach einem der Ansprüche 1 bis 8, dadurch gekennzeichnet, daß in eine Durchgangsbohrung zwei mit Abstützkanten (79, 79') oder Gegenrasten versehene Beschlagteile (78, 78') von gegenüberliegenden Seiten her einsetzbar sind, deren beiden zugehörigen Beschlagteile (80, 80') mit zueinander versetzten Rasthebeln versehen sind.

10. Verbindungsbeschlag nach Anspruch 9, dadurch gekennzeichnet, daß die in eine Durchgangsbohrung einsetzbaren Beschlagteile (78, 78') identisch ausgeführt sind und bei ihrer spiegelbildlichen Anordnung ineinandergreifende Abstufungen oder Vorsprünge besitzen.

**Claims**

1. A connecting fixture for detachably connecting two platelike furniture parts, which preferably abut at right angles to each other, consisting of two fixture parts (46, 50), which are adapted to be secured to respective furniture parts to be connected and one of which is adapted to be inserted in part into an opening of the other furniture part or fixture part until the fixture parts (46, 50) and or the furniture parts engage each other, and is provided with a latching lever (49), which is mounted to be pivotally movable against the force of a spring (52) and has a forward hook-shaped latching projection so that the fixture parts when interfitted are adapted to be connected in that the rear side face (55) of the latching projection (48) snaps behind a backing edge (45) of a step or ledge of the other fixture part (46), wherein the furniture part or fixture part has an edge over which the latching projection slides during the insertion and said edge and/or the forward side of the latching projection (48) is provided with a bevel and means (54, 64) are provided for pivotally moving the latching lever (49) to its unlocked position against the force of the spring (52), characterized in that when the fixture parts (46, 50) have been connected the rear side face (55) of the latching projection (48) bears with a wedge action on the backing edge (45) above the lower end of said rear side face in such a manner that the spring (52) exerts on the latching lever (49) a tension which always forces the fixture parts (46, 50) against each other, and locking means are provided for holding the latching lever (49) in the non-latching position to which said lever has been pivotally moved.

2. A connecting fixture according to claim 1, characterized in that the backing edge consists of a pin (45, 79, 79') which is circular in cross-section.

3. A connecting fixture according to claim 1 or 2, characterized in that the radial distance from the rear side face (55) of the hook-shaped portion of the latching lever (49) to its pivotal axis decreases continuously toward the lower end of that side face (55) and in latching position the side face (55) engages the backing edge or the pin (45) approximately in the middle portion of that side face.

4. A connecting fixture according to any of claims 1 to 3, characterized in that the pin (45, 79, 79') is provided with a knurled surface or with axially extending flutes.

5. A connecting fixture according to any of claims 1 to 4, characterized in that the top wall of the housing is provided adjacent to the latching lever (49) with a tapped bore (53) and a headless screw (54) for depressing the latching lever (49) against the force of the spring (52) is adapted to be screwed into said bore.

6. A connecting fixture according to any of claims 1 to 4, characterized in that a two-armed lever (64) is pivoted to the top wall of that fixture part which is provided with the latching lever and said two-armed lever has a longer arm (67) engaging said wall on the outside and a shorter arm, by which the latching lever (49) mounted in said fixture part is engaged in such a manner that said latching lever is pivotally movable to its latching position when the longer lever arm (67) is approximately parallel to said wall and that the latching lever is disengaged from the backing edge or the latching abutment (45) by an upward movement of the longer lever arm (67).

7. A connecting fixture according to claim 6, characterized in that the two-armed lever (64) is offset so that it is held in its upwardly directed position by the swung-out latching lever (49).

8. A connecting fixture according to claim 6 or 7, characterized in that the wall of the fixture part is formed with a recess, which receives the longer lever arm (67) in its latched position so that its surface is flush with the wall.

9. A connecting fixture according to any of claims 1 to 8, characterized in that two fixture parts (78, 78') provided with backing edges (79, 79') or with latching abutments are adapted to be inserted into a through bore from opposite sides and are associated with two fixture parts (80, 80') provided with latching levers which are offset from each other.

10. A connecting fixture according to claim 9, characterized in that the fixture parts (78, 78') which are adapted to be inserted into a through bore are identical and have steps or projections which interfit when said parts are arranged with mirror symmetry.


**Revendications**

1. Ferrure de raccordement pour relier de manière détachable deux parties de meuble en forme de plaques entrant en contact de préférence à angle droit constituée de deux pièces de ferrure (46, 50) pouvant être fixées à chacune des parties de meuble, ferrure dont une des pièces est partiellement engagée dans l'échancrure de l'autre partie de meuble ou pièce de ferrure jusqu'à ce que les pièces de ferrure (46, 50) et/ou les parties de meuble se heurtent réciproquement et dont une est pourvue d'un levier d'encliquetage (49) avec un crochet d'encliquetage à l'avant logé de manière pivotante contre la force d'un ressort (52) de sorte que les pièces de ferrure peuvent être raccordées dans l'état engagé par l'encliquetage de la face latérale arrière (55) du crochet d'encliquetage en saillie (48) derrière l'arête d'appui (45) d'un cran ou d'un listel de l'autre pièce de ferrure (46), un bord de la partie de meuble ou de la pièce de ferrure se glissant lors du mouvement d'engagement par dessus le crochet d'encliquetage en saillie (48) et/ou la face avant du crochet d'encliquetage en saillie (48) étant biseautée et est pourvue d'un dispositif (54, 64) pour pivoter le levier d'encliquetage (49) contre la force du ressort (52) dans sa position déverrouillée, caractérisée par le fait que dans l'état engagé des pièces de ferrure (46, 50) le crochet d'encliquetage (48) s'appuie en agissant comme un coin contre l'arête d'appui (55) audessus de l'extrémité inférieure de ladite face latérale arrière de manière à ce que le ressort (52) applique sur le levier d'encliquetage (49) une tension qui force en permanence les pièces de ferrure (46, 50) l'une contre l'autre et que ledit dispositif de verrouillage est prévu pour tenir le levier d'encliquetage (49) dans la position déverrouillée dans laquelle ledit levier (49) a été pivoté.

2. Ferrure de raccordement selon la revendication 1 caractérisée par le fait que l'arête d'appui consiste en un boulon (45, 79, 79') de section circulaire.

3. Ferrure de raccordement selon l'une des revendications 1 ou 2 caractérisée par le fait que la distance radiale de la face latérale arrière (55) de la partie en forme de crochet du levier d'encliquetage (49) diminue progressivement en direction du pied de la face latérale et que la face latérale (55) repose dans la position verrouillée à peu près par sa partie médiane sur l'arête d'appui ou le boulon (45).

4. Ferrure de raccordement selon l'une des revendications 1 à 3 caractérisée par le fait que le boulon (45, 79, 79') est pourvu d'un moletage ou de rainures disposées de manière axiale.

5. Ferrure de raccordement selon l'une des revendications 1 à 4 caractérisée par le fait que la paroi supérieure du boîtier dans la zone du levier d'encliquetage (49) est pourvue d'un alésage fileté (53) dans lequel peut être vissée une vis sans tête (54) agissant contre la force du ressort (52).

6. Ferrure de raccordement selon l'une des revendications 1 à 4 caractérisée par le fait que dans la paroi supérieure de la pièce de ferrure pourvue du levier d'encliquetage est logé de manière pivotante un levier à deux bras (64) dont le bras plus long (67) entre en contact avec la face extérieure de la paroi et dont le bras plus court entre en contact avec le levier d'encliquetage (49) logé dans la pièce de ferrure de manière à ce qu'il puisse pivoter dans la position verrouillée lorsque le levier plus long (67) est disposé à peu près en parallèle par rapport à la paroi et que lorsque le bras de levier plus long (67) est redressé, le levier d'encliquetage est dégagé de l'arête d'appui ou du contrecliquet (45).

7. Ferrure de raccordement selon la revendication 6 caractérisée par le fait que le levier à deux bras (64) est courbé de manière à ce qu'il est tenu dans sa position dressée lorsque le levier d'encliquetage (49) est pivoté au maximum.

8. Ferrure de raccordement selon les revendications 6 ou 7 caractérisée par le fait que la paroi de la pièce de ferrure est pourvue d'une échancrure dans laquelle se loge le bras de levier plus long (67) dans sa position verrouillée de manière à ce que sa surface forme un plan avec la paroi.

9. Ferrure de raccordement selon l'une des revendications 1 à 8 caractérisée par le fait que deux pièces de ferrure (78, 78') pourvues d'arêtes d'appui (79, 79') ou de contrecliquets sont adaptées pour être insérées dans un alésage traversant à partir de côtés opposés et dont les deux pièces de ferrure (80, 80') associées sont pourvues de leviers d'encliquetage décalés l'un par rapport à l'autre.

10. Ferrure de raccordement selon la revendication 9 caractérisée par le fait que les pièces de ferrure (78, 78') qui sont adaptées pour être insérées dans un alésage traversant sont identiques et ont des crans ou saillies qui s'imbriquent lorsque lesdites pièces ont une disposition symétriquement inversée.

FIG.1

FIG.2

FIG.3

FIG.5

FIG.4

FIG.6

FIG.7

# FIG.8

68

49

# FIG.9

69

69

70

# FIG.10

FIG.11

0 058 220